# NEUE EUROPÄISCHE PATENTSCHRIFT

(11) **EP 1 548 320 B2**
(45) Veröffentlichungstag und Bekanntmachung des Hinweises auf die Entscheidung über den Einspruch: **20.01.2010**
(45) Hinweis auf die Patenterteilung: 13.09.2006
(21) Anmeldenummer: 04004291.3
(22) Anmeldetag: 26.02.2004
(51) Int. Cl.: F16F 9/05

(54) **Luftfeder**
Air spring
Ressort pneumatique

(30) Priorität: 22.12.2003 DE 10361089
(43) Veröffentlichungstag der Anmeldung: 29.06.2005
(73) Patentinhaber: Continental AG, 30165 Hannover (DE)
(72) Erfinder: Kind, Andreas, 31141 Hildesheim (DE); Narberhaus, Stefan, 30826 Garbsen (DE); Jeischik, Joachim, 30974 Wennigsen (DE)
(74) Vertreter: Finger, Karsten

(56) Entgegenhaltungen:
- EP-A- 0 306 732
- EP-A- 1 164 309
- DE-A1- 2 130 215
- DE-A1- 4 401 770
- DE-A1- 19 740 981
- DE-A1- 19 907 656
- DE-U1- 8 413 300
- US-A1- 2003 155 198
- US-A1- 2003 160 368

## Beschreibung

Die Erfindung betrifft eine Luftfeder gemäß dem Oberbegriff des Anspruchs 1.

Aus der DE 21 30 215 A1 ist eine Balgbefestigung für Luftfedern oder dergleichen mit einem geschlossenen, hohlkehlenförmigen Klemmring bekannt. Ein Behälterrohr weist dabei eine rechteckige Sicke auf, über die der zu befestigende Luftfederbalg gezogen wird. Im Bereich der Sicke wird der Luftfederbalg von einem Klemmring gegen das Behälterrohr gehalten, wobei ein zwischen Balgende und oberer Sickenkante eingelegter Stützring dafür sorgt, dass der Klemmring zusammen mit der unteren Sickenkante eine Klemmstelle für den Balg darstellt, deren Anpresskraft mit zunehmender Belastung in der Beanspruchungsrichtung zunimmt.

Aus der DE 44 01 770 A1 ist ein selbstpumpendes Federbein mit Niveauregelung bekannt, bei dem eine flexible Außenwandung über einen Klemmring an einer starren Außenwandung befestigt ist.

Aus der DE 84 13 300 U1 ist eine pneumatische Feder-Dämpfer-Einheit bekannt, bei der ein Rollbalg an einer Abwälzhülse über einen Klemmring befestigt ist.

Aus der DE 197 40 981 X1 ist eine Luftfeder gemäß dem Oberbegriff des Anspruchs 1 bekannt. Bei der aus dieser Druckschrift bekannten Luftfeder ist das Anschlussteil und/oder der Spannring im Bereich der Einspannung mit einem Elastomerstreifen aufgedickt.

Problematisch bei der Befestigung eines Luftfederbalges an einem Klemmgrund ist einerseits die stabile Befestigung, andererseits die Gewährleistung der Druckdichtigkeit im Klemmbereich, insbesondere bei Temperaturschwankungen.

Aufgabe der vorliegenden Erfindung ist es, eine Luftfeder bereitzustellen, die bei einer stabilen Klemmung eine ausreichende Dichtigkeit im Klemmbereich bereitstellt.

Erfindungsgemäß wird diese Aufgabe durch die kennzeichnenden Merkmale des Anspruchs 1 gelöst. Insbesondere bei großen Temperaturschwankungen wird die Druckdichtigkeit der Luftfeder sichergestellt, indem das zusätzliche, ggf. separate Dichtelement einen zusätzlichen Abdichteffekt bereitstellt. Durch die elastische Verformung des Dichtelementes auch bei großen Temperaturschwankungen und damit verbundenen Verformungen des Klemmgrundes bleibt die Druckdichtigkeit der Luftfeder unter allen Arbeitsbedingungen sichergestellt.

Die Erfindung sieht vor, dass in dem Klemmgrund eine Aufnahmeeinrichtung für das Dichtelement angeordnet ist, um eine exakte Positionierung des Dichtelementes zu gewährleisten. Diese Aufnahmeeinrichtung ist als Nut ausgebildet, in die das Dichtelement eingeklemmt, eingeklebt oder in ihr verspannt ist. Die Aufnahmeeinrichtung ist somit eine Positioniereinrichtung für das Dichtelement. Neben der Ausgestaltung des Dichtelementes als O-Ring können auch Dichtelemente mit anderen Querschnittsformen, beispielsweise rechteckig oder oval eingesetzt werden. Als Werkstoffe für das Dichtelement können alle ausreichend elastischen Werkstoffe eingesetzt werden, beispielsweise Gummi, Polyurethan oder andere Elastomere.

Um sicherzustellen, dass der Klemmring sicher positioniert bleibt, ist der Klemmgrund vorteilhafterweise als Nut ausgebildet, so dass eine axiale Bewegung des Klemmringes aufgrund der an dem Klemmring anliegenden Nutwandungen des Klemmgrundes vermieden wird.

Insbesondere bei dünnen Luftfederbälgen ist die Erfindung vorteilhaft einzusetzen, da aufgrund der geringen Materialstärke nur ein geringes Maß an Nachgiebigkeit durch den Luftfederbalg an der Klemmstelle bereitsteht, um bei Temperaturschwankungen oder anderen Belastungen Verlagerungen oder Verformungen an der Klemmstelle auszugleichen und die Dichtigkeit der Luftfeder zu gewährleisten. Insbesondere bei Luftfedern in Personenkraftwagen mit einer Außenführung sind die Luftfederbälge besonders dünn ausgebildet, was die oben beschriebenen Probleme nach sich zieht. Das zusätzliche Dichtelement gewährleistet insbesondere bei dünnwandigen Luftfederbälgen eine gute Dichtigkeit der Klemmverbindung.

Bei Ausbildung der Aufnahmeeinrichtung oder Positioniereinrichtung als Nut ist das Dichtelement vorteilhafterweise so ausgestaltet, dass das Dichtelement ausreichend radial nach außen übersteht, um die Dichtfunktion zu gewährleisten.

Die kann dadurch geschehen, dass die Tiefe der Nut nicht mehr als 2/3 des radialen Querschnittes des Dichtelementes beträgt, das Dichtelement also mit 1/3 seines Durchmessers radial nach außen übersteht. Im Einzelfall kann ein Überstand von ¼ des Durchmessers genügen, ebenfalls kann bei starken Formschwankungen oder hohen Drücken der Überstand ½ oder 2/3 des Durchmessers betragen.

Nachfolgend wird ein Ausführungsbeispiel der Erfindung anhand der Figuren erläutert, in denen:
- Fig. 1 -: eine Teilansicht einer Luftfeder in Schnittansicht; sowie
- Fig. 2 -: eine Detailansicht der Luftfeder dargestellt ist.

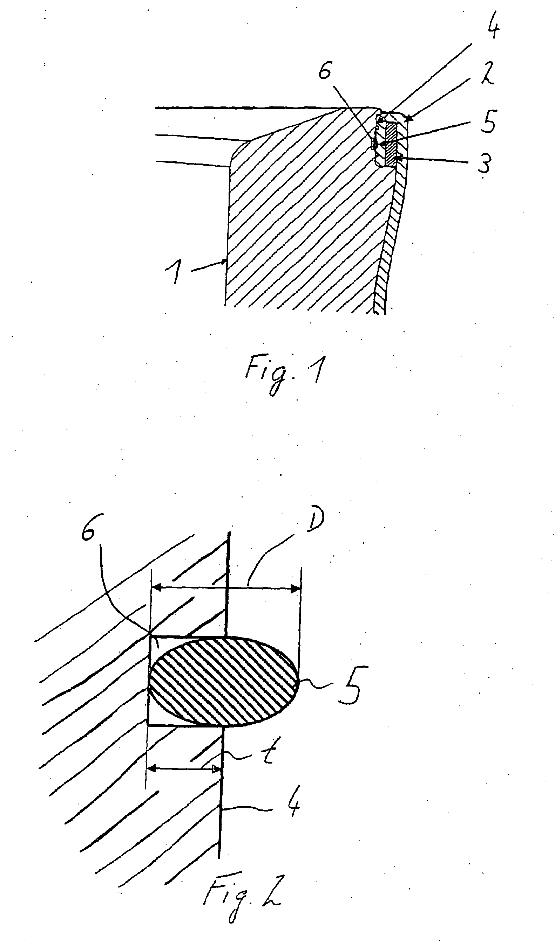

In der Figur 1 ist ein Luftfederkolben 1 dargestellt, an dem ein Luftfederbalg 2 über einen bevorzugt umlaufenden Klemmring 3 befestigt ist. Der Luftfederbalg 2 liegt dabei an einem nutförmig ausgebildeten Klemmgrund 4 an und wird über den Klemmring 3 an dem Luftfederkolben 1 festgelegt. Der Klemmring 3 sitzt dabei auf einer Seitenwandung des Klemmgrundes 4 auf und wird dreiseitig von dem Luftfederbalg 2 umgeben, indem der Luftfederbalg 2 um den Klemmring 3 umgeschlagen ist. Der Luftfederbalg 2 liegt an dem Luftfederkolben 1 an und kann auf ihm abrollen.

Eine Axialbewegung des Klemmringes 3 wird durch die nutförmige Ausbildung des Klemmgrundes 4 verhindert, wobei die Nutwandungen unterschiedlich dimensioniert sind. In dem Klemmgrund 4 selbst ist eine zumindest teilweise umlaufende Nut 6 ausgebildet, in die ein Dichtelement 5 eingelegt ist, um eine Abdichtung der Luftfeder sicherzustellen. Insbesondere bei Temperaturschwankungen wird durch das zusätzlich vorhandene Dichtelement 5 eine Verbesserung der Druckdichtigkeit im Klemmbereich gewährleistet. Das elastische Dichtelement 5 ist dabei so ausgebildet, dass die Elastizität auch bei großen Temperaturschwankungen und damit verbundenen Verformungen des Klemmgrundes 4 ausreichen, um die Druckdichtigkeit der Luftfeder sicherzustellen.

Die Ausbildung der Aufnahmeeinrichtung 6 als Nut stellt die exakte Positionierung des Dichtelementes 5 sicher.

Durch die Anordnung eines zusätzlichen Dichtelementes 5 wird neben der Verbesserung der Dichtigkeit erreicht, dass die Anforderungen an die Bearbeitung des Klemmgrundes 4 reduziert werden können. Hinsichtlich der Oberflächenbeschaffenheit, Rundheit und Geometrie des Klemmgrundes 4 können aufgrund des zusätzlichen Dichtelementes geringere Anforderungen gestellt werden, was einen Kostenvorteil mit sich bringt. Da die Oberfläche des Klemmgrundes 4 aufgrund des Vorhandenseins des zusätzlichen Dichtelementes 5 eine geringere Oberflächengüte aufweisen muss, um die gleiche Dichtigkeit zu gewährleisten, wird bei gleicher Klemmkraft des Klemmringes 3 eine höhere Festigkeit des Luftfederbalges 2 aufgrund der höheren Oberflächenrauhigkeit gewährleistet. Der Klemmbereich oder Klemmgrund 4 hätte sonst durch aufwendige Rändelverfahren zusätzlich aufgerauht werden müssen.

Alternativ zu der Befestigung des Luftfederbalges 3 an einem Luftfederkolben 1 kann eine Befestigung auch an einem Luftfederdeckel oder entsprechend anderen Bauteilen einer Luftfeder vorgesehen sein.

Das Dichtelement 5 kann bei geeigneter Materialwahl in den Luftfederbalg 2 einvulkanisiert oder an ihm angeklebt sein, alternativ kann eine Integration in den Klemmgrund 4 bzw. in die Aufnahmeeinrichtung 6 durch Einkleben, Einklemmen, Verspannen oder Einspritzen erfolgen.

In der Figur 2 ist in Detailansicht der Klemmgrund 4 mit der als Nut ausgebildeten Aufnahmeeinrichtung 6 gezeigt. Der Federbalg 2 ist noch nicht montiert, so dass das Dichtelement 5, das in die Nut 6 eingeklemmt ist, über den Klemmgrund 4 hinaussteht. Die Nuttiefe t ist dabei geringer als der Durchmesser D des Dichtelementes 5 bzw. die Radialausdehnung des Dichtelementes 5, so dass auch bei größeren Formschwankungen oder Verlagerungen, beispielsweise des Luftfederkolbens 1, die Dichtwirkung aufrechterhalten bleibt. In der zeichnerischen Darstellung gemäß Figur 2 beträgt die Differenz zwischen der Radialausdehnung D des Dichtelementes 5 und der Nuttiefe t ungefähr die Hälfte der Radialausdehnung D, alternative Abmessungen sind möglich und richten sich nach den technischen Erfordernissen. Das Dichtelement 5 gemäß Figur 2 ist als Elastomer-Ring mit einem Ovalquerschnitt ausgebildet, andere Querschnittsformen oder Ausbildungen der Dichtelemente sind ebenfalls vorgesehen.

## Patentansprüche

1. Luftfeder, insbesondere für Fahrzeuge, mit einem Luftfederbalg (2), der über einen Klemmring (3) an einem als Nut ausgebildeten Klemmgrund (4) festgelegt ist und einem zwischen dem Luftfederbalg (2) und dem Klemmgrund (4) angeordneten zusätzlichen Dichtelement (5), **dadurch gekennzeichnet, dass** im Klemmgrund (4) eine als Nut ausgebildete Aufnahmeeinrichtung (6) für das Dichtelement (5) vorgesehen ist, in die das Dichtelement eingelegt ist, wobei das Dichtelement (5) derart ausgestaltet ist, dass es ausreichend nach radial außen übersteht, um die Dichtfunktion zu gewährleisten.

2. Luftfeder nach Anspruch 1, **dadurch gekennzeichnet, dass** das Dichtelement (5) als O-Ring ausgebildet ist.

3. Luftfeder nach Anspruch 1 oder 2, **dadurch gekennzeichnet, dass** das Dichtelement (5) aus einem elastischen Werkstoff, insbesondere einem Elastomer, Gummi oder Polyurethan ausgebildet ist.

4. Luftfeder nach einem der vorstehenden Ansprüche, **dadurch gekennzeichnet, dass** das Dichtelement (5) in den Luftfederbalg (2) einvulkanisiert oder an dem Luftfederbalg (2) angeklebt ist.

5. Luftfeder nach einem der vorstehenden Ansprüche, **dadurch gekennzeichnet, dass** das Dichtelement (5) an dem Klemmgrund (4) festgelegt, insbesondere in der Aufnahmeeinrichtung (6) eingeklemmt, eingeklebt oder darin verspannt ist.

6. Luftfeder nach einem der voranstehenden Ansprüche, **dadurch gekennzeichnet, dass** der Klemmgrund (4) an einem Luftfederkolben (6) oder einem Luftfederdeckel ausgebildet ist.

7. Luftfeder nach einem der vorstehenden Ansprüche, **dadurch gekennzeichnet, dass** die Tiefe der Nut nicht mehr als 2/3 des radialen Querschnittes (8) des Dichtelementes (5) beträgt.

## Claims

1. Pneumatic spring, in particular for vehicles, with a pneumatic spring bellows (2) which is secured to a clamping bottom (4) designed as a groove via a clamping ring (3), an additional sealing element (5) and arranged between the pneumatic spring bellows (2) and the clamping bottom (4), **characterized in that** a reception device (6), designed as a groove, for the sealing element (5) is provided in the clamping bottom (4), into which reception device (6) the sealing element is introduced, the sealing element (5) being configured in such a way that it projects radially outwards sufficiently to ensure the sealing function.

2. Pneumatic spring according to Claim 1, **characterized in that** the sealing element (5) is designed as an O-ring.

3. Pneumatic spring according to Claim 1 or 2, **characterized in that** the sealing element (5) is produced from an elastic material, in particular an elastomer, rubber or polyurethane.

4. Pneumatic spring according to one of the preceding claims, **characterized in that** the sealing element (5) is vulcanized into the pneumatic spring bellows (2) or is adhesively bonded to the pneumatic spring bellows (2).

5. Pneumatic spring according to one of the preceding claims, **characterized in that** the sealing element (5) is secured to the clamping bottom (4), in particular is clamped, adhesively bonded or braced in the reception device (6).

6. Pneumatic spring according to one of the preceding claims, **characterized in that** the clamping bottom (4) is formed on a pneumatic spring piston (6) or a pneumatic spring cover.

7. Pneumatic spring according to one of the preceding claims, **characterized in that** the depth of the groove amounts to no more than 2/3 of the radial cross section (8) of the sealing element (5).

## Revendications

1. Ressort pneumatique en particulier pour véhicules, comportant un coussin d'air pneumatique (2), qui est fixé au moyen d'un anneau de serrage (3) à un fond de serrage (4) réalisé sous forme de gorge, et un élément d'étanchéité (5) additionnel disposé entre le coussin d'air pneumatique (2) et le fond de serrage (4), **caractérisé en ce qu'**un moyen de réception (6) réalisé sous forme de gorge pour l'élément d'étanchéité (5) est prévu dans le fond de serrage (4), dans lequel l'élément d'étanchéité est inséré, l'élément d'étanchéité (5) étant configuré de telle sorte qu'il puisse faire suffisamment saillie radialement vers l'extérieur pour garantir l'étanchéité.

2. Ressort pneumatique selon la revendication 1, **caractérisé en ce que** l'élément d'étanchéité (5) est réalisé sous forme d'un joint torique.

3. Ressort pneumatique selon la revendication 1 ou 2, **caractérisé en ce que** l'élément d'étanchéité (5) est réalisé en une matière élastique, en particulier un élastomère, caoutchouc ou polyuréthane.

4. Ressort pneumatique selon l'une des revendications précédentes, **caractérisé en ce que** l'élément d'étanchéité (5) est co-vulcanisé dans le coussin d'air pneumatique (2) ou collé au coussin d'air pneumatique (2).

5. Ressort pneumatique selon l'une des revendications précédentes, **caractérisé en ce que** l'élément d'étanchéité (5) est appliqué rigidement sur le fond de serrage (4) en particulier est inséré dans le moyen de réception (6), par serrage, collage ou par mise sous contrainte dans celui-ci.

6. Ressort pneumatique selon l'une des revendications précédentes, **caractérisé en ce que** le fond de serrage (4) est réalisé sur un piston pneumatique (6) ou sur un couvercle pneumatique.

7. Ressort pneumatique selon l'une des revendications précédentes, **caractérisé en ce que** la profondeur de la gorge n'excède pas les 2/3 de la section radiale (8) de l'élément d'étanchéité (5).
